Europäisches Patentamt

European Patent Office

Office européen des brevets

(19)

(11) Publication number: **0 230 113**
**A2**

(12) ## EUROPEAN PATENT APPLICATION

(21) Application number: 86309310.0

(22) Date of filing: 28.11.86

(51) Int. Cl.⁴: **B32B 27/32** , C08L 23/10

(30) Priority: 29.11.85 US 802878

(43) Date of publication of application:
29.07.87 Bulletin 87/31

(84) Designated Contracting States:
AT BE CH DE ES FR GB GR IT LI LU NL SE

(71) Applicant: AMERICAN CAN PACKAGING INC.
American Lane P.O. Box 2600
Greenwich Connecticut 06836-2600(US)

(72) Inventor: Kim, Yong Joo
1261 Meadow Lane Neenah
Wisconsin 54956(US)

(74) Representative: Harvey, David Gareth et al
Graham Watt & Co. Riverhead
Sevenoaks Kent TN13 2BN(GB)

(54) **Polymeric compositions, films and multiple layer structures incorporating the compositions and packages made therefrom.**

(57) The composition which forms the basis of films and plural layer sheet materials for packaging is a blend of a first component of a polypropylene polymer with a second component of an ethylene-based copolymer, the latter having an ethylene copolymerized with moieties of a second molecule where the second molecule is selected from the group consisting of propylene and butene-1.

One plural layer sheet material has a barrier layer such as a vinylidene chloride polymer layer (24) sandwiched between an abuse resistant layer (14) and a layer (12) made from the blend composition; layer (12) can be used as inner surfaces and to form peripheral heat seals (28) in the manufacture of a packaging pouch - (30) from confronting pieces of the sheet material.

FIG.4

FIG.5

EP 0 230 113 A2

## "POLYMERIC COMPOSITIONS, FILMS AND MULTIPLE LAYER STRUCTURES INCORPORATING THE COMPOSITIONS AND PACKAGES MADE THEREFROM"

The present invention relates generally to polymeric materials suitable, e.g. for packaging, and relates more particularly to polymeric compositions, films and multiple layer structures incorporating the compositions and packages made therefrom.

The packaging industry makes and uses many sheet structures in the production of heat sealed packages. Such packages find use in a multiplicity of applications. Of particular interest to the present invention are those applications where the finished package may be subjected to relatively abusive physical shocks, as by being dropped, bumped, or the like. In cases where the package contains fluid components, the shock though localised may be transferred to all parts of the package by the contained fluid. The transferred shock can be enough to cause failure of the package at its weakest point when the severity of the shock is sufficiently great.

Heat sealed packages tend to fail at or close to a heat seal. Typical failures occur by partial peeling of the facing sealant layers from each other in the seal area. Where the shock is severe enough, the package may have a catastrophic failure wherein the package may be penetrated to the outside.

Such failure of the package, whether by partial peeling or by catastrophic failure, comprises the containment and protective functions of the package, and is thus not acceptable. It is desirable to find material compositions, which may be used in packaging sheet structures, which enhance the capability of the sheet structure, and particularly the sealant layer, to withstand increased amounts of shock-type abuse.

In certain packaging applications, the packages are subjected to heat treatment at elevated temperatures of up to about 250°F (121°C) as part of the packaging process. Such heat treatments are common in certain packaging of medical supplies and shelf stable foods.

Some polymers, such as polypropylene, which are otherwise excellent for use with such high temperature applications, tend to become brittle after being subjected to such heat treatments. Increasing brittleness means reducing ability to resist shock type abuse. While the use of such materials is desirable for their ability to withstand heat treatment without failure of the package during the heat treatment, the resulting brittleness is undesirable as it affects the ability of the package to withstand the shocks of, for example, shipping and handling.

This invention aims to provide improved material blend compositions, improved single layer films and multiple layer films and sheet structures incorporating them, and improved packages, particularly heat sealed packages.

The invention also aims to provide heat sealed packages capable of withstanding increased amounts of physical shock type abuse, especially after the closed and sealed packages have been subjected to elevated temperatures of up to about 250°F (121°C).

According to the present invention there is provided a composition of matter or a polymeric film made from a polymeric blend comprising:

(a) a first component which is about 10% to about 95% by weight of a polypropylene, comprising about 50 mole percent to about 100 mole percent propylene moieties and about 50 mole percent to about 0 mole percent ethylene moieties; and

(b) a second component which is about 90% to about 5% by weight of an ethylene-based copolymer, the ethylene-based copolymer consisting essentially of ethylene copolymerized with moieties of a second molecule, the composition of the second molecule being selected from propylene and butene-1.

The ethylene-based copolymer preferably is about 10 to about 95 mole percent ethylene and about 90 to about 5 mole percent of the moieties of the second molecule. The composition of the second molecule is selected from propylene and butene-1.

In the preferred embodiments of the invention, the polymer blend is about 10% to about 95% of the first component and about 90% to about 5% of the second component.

In especially preferred embodiments, the first component is about 92 to about 98 mole percent propylene moieties and about 8 to about 2 mole percent ethylene moieties. It is further desirable to use the combination wherein the blend components are about 40% to about 80% of the first component and about 60% to about 20% of the second component, and the first component is about 92 to about 98 mole percent propylene moieties and about 8 to about 2 mole percent ethylene moieties.

When the second molecule of the copolymer of the second component is butene-1, the copolymer is preferably about 50 to about 95 mole percent ethylene and about 50 to about 5 mole percent butene-1, and most preferably about 85 to about 95 mole percent ethylene and about 15 to about 5 mole percent butene-1.

When the second molecule of the copolymer of the second component is propylene, the copolymer is preferably about 60 to about 80 mole percent ethylene and about 40 to about 20 mole percent propylene.

The blend compositions according to the invention are readily formed into a sheet-like layer or film such as by conventional extrusion processes. The so-formed layer may be used as a single layer film. In more preferred forms, the blend compositions are used to make a layer which is used as part of a multiple layer sheet structure.

The invention also provides a multiple layer sheet structure, comprising:

(a) a first, blend layer the composition of which is a blend including (i) as a first component, about 10% to about 95% by weight of polypropylene, the polypropylene comprising about 50 mole percent to about 100 mole percent propylene moieties and about 50 mole percent to about 0 mole percent ethylene moieties and (ii) as a second component, about 90% to about 5% by weight of an ethylene-based copolymer consisting essentially of ethylene copolymerized with moieties of a second molecule, the composition of the second molecule being selected from propylene and butene-1; and

(b) a second layer.

In one such sheet structure, a first layer is a metal foil, and a second layer of an abuse resistant polymer such as a polyamide is adhered to one of the two surfaces of the foil layer. A third layer of the blend composition is adhered to the sheet structure on the other side of the foil layer.

In another such sheet structure, a first layer of a polyamide has a second layer of an ethylene vinyl alcohol copolymer adhered to one of of its two surfaces. A third layer of a polyamide is on the surface of the second layer not contacting the first layer. A fourth layer of the blend composition is adhered to the sheet structure on the other of the two surfaces of the first layer.

In yet another such sheet structure, a first layer is a barrier material and the composition of the first barrier layer is a vinylidene chloride copolymer.

A second layer, of an abuse resistant polymer, is adhered to one surface of the first layer. A third layer, of the blend composition, is adhered to the sheet structure on the other side of the first layer.

The single layer films and multiple layer sheet structures according to the invention find a plurality of uses in packaging. The films and sheet structures of the invention may be fabricated into packages or may be used as a portion of a packaging container. In such an application a formed container, for example, may be made of other materials, and a film or sheet structure of the invention may then be used as a lid for the container. Alternately, films or sheet structures of the invention may be formed into a container, and an appropriate material may be used as a lid for the container.

Many of the films and sheet structures of the invention are capable of tolerating retort conditions of at least about 250°F (121°C) for a period of at least about 10 minutes, preferably at least about 30 minutes.

The invention comprehends methods of making the foregoing films and sheet structures.

Embodiments of the invention will now be described in more detail, by way of example only, with reference to the accompanying drawings, in which:

FIGURE 1 is a cross section through a portion of a 2-layer film embodying the invention,

FIGURE 2 is a cross section through a portion of a 3-layer sheet structure emtodying the invention, the structure having a layer of metal foil as a barrier layer,

FIGURE 3 is a cross-section through a portion of a 4-layer film embodying the invention,

FIGURE 4 is a cross-section through a portion of another 3-layer film embodying the invention, the film having a polymeric barrier material as its internal layer, and

FIGURE 5 is a perspective view of a typical pouch-type package in accordance with the invention.

The invention encompasses a plurality of forms and embodiments. In its most generic form, it is a composition of matter formed by the intimate blending together of the blend components. The invention can be embodied in a variety of articles which can be formed such as by molding or extruding the blend composition. A preferred form of article so fabricated is a single layer packaging film which may be formed by conventional extrusion processes. Such films are typically thin and flexible, being of the order of 1 mil to 5 mils (0.025 to 0.13 mm) thick. Thicker sections and shapes may also be formed, as for other uses.

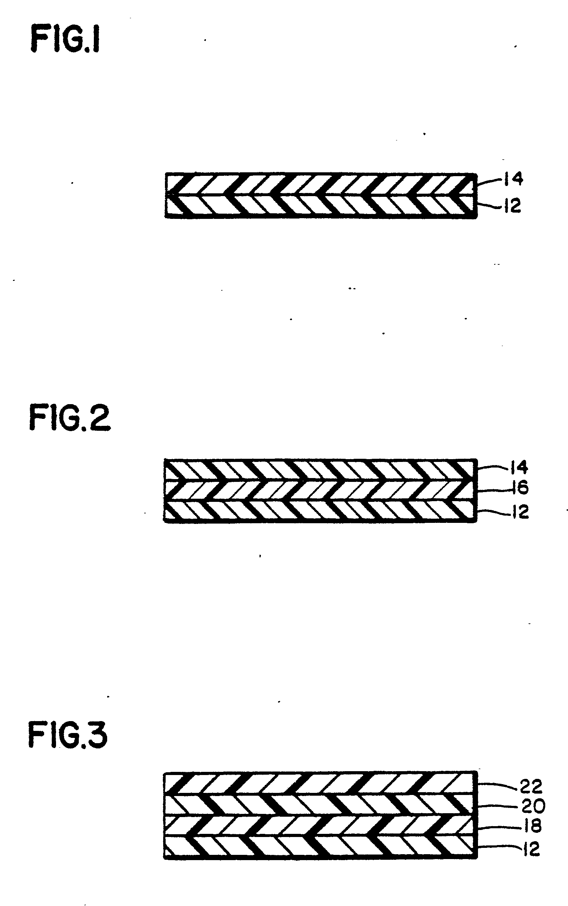

Other preferred embodiments of the invention are those where the blend composition is used to form one layer of a multiple layer sheet structure. Representative of these films are those illustrated in FIGURES 1-4. Other sheet structures are possible, and contemplated.

Turning now to FIGURE 1, layer 12 is a layer of a novel blend composition embodying this invention. Layer 14 is a layer of an abuse resistant polymer, such as polypropylene.

The structure of FIGURE 1 illustrates a simple form of the invention suitable for packages. It is advantageous in its simplicity, and may find use in applications where high levels of protection from gaseous infusion are not of paramount importance.

3

Where protection from gaseous infusion is more important, a layer of a barrier material is used. In the structure of FIGURE 2, layer 16 is a layer of metal foil, which provides an excellent barrier to gaseous infusion. Layer 14 is a layer of an abuse resistant polymer as in FIGURE 1. Layer 12 is a layer of a blend composition according to the invention.

The structure of FIGURE 2 is representative of a sheet structure useful in making retortable pouches, such as for shelf-stable food packaging or for packaging of medical supplies or products. Such structures may also be used for applications where the package is not subjected to retort conditions. In those cases, the specific materials selected for each layer need not be evaluated in terms of their ability to withstand the retorting process. Typical problems encountered in retort processing are excessive softening during the processing, and/or embrittlement resulting from the processing. The foil layer 16 of such a retortable package is commonly 28 gauge to 100 gauge, with the thinner gauges being preferred for economic reasons. The abuse resistant layer 14 may be any of the conventionally known abuse resistant polymers. These include, for example, nylon, oriented nylon, oriented polypropylene, and oriented polyester. For use in retort packaging, layer 14 is typically about 50 gauge, with a range of about 25 gauge to about 100 gauge. It is conventionally known to achieve adhesion between foil layer 16 and abuse resistant layer 14 by means of adhesives such as polyester urethane curing type adhesives. These adhesives are acceptable for such use herein.

The blend layer 12 may be any of the blend compositions according to the invention. In FIGURE 2, layer 12 is designed to be used as a heat seal layer. A minimum thickness for achieving strong heat seals is about 1 mil (0.025 mm), so that is a preferred minimum thickness. Thicker heat seal layers may advantageously provide more efficient use of the heat seal material, up to about 4 mils (0.10 mm), and that is a generally preferred maximum thickness. While layer 12 may be much thicker, for example 8 -10 mils - (0.20 to 0.25 mm), and still be encompassed by the invention, no material benefit is usually seen to be derived from the use of the additional material; so the greater thicknesses are not generally preferred.

Layer 12 may be adhered to layer 16 by a conventional polyester urethane curing type adhesive. Alternately, adhesion may be achieved by other methods such as by extrusion lamination, coextrusion lamination, or extrusion coating followed by heat and pressure at a hot nip. In some instances, it may be desirable to use a primer on the surface of the foil layer 16 before adhering layers 12 and 16 to each other.

Turning next to FIGURE 3, layer 12 is a blend according to the invention as in FIGURES 1 and 2. Layer 18 is a polyamide. Layer 20 is an ethylene vinyl alcohol copolymer. Layer 22 is a polyamide.

The structure of FIGURE 3 represents generically a family of sheet structures which provide effective barriers to transmission of oxygen through the sheet structure while affording transparency of the packaging material for visibility of the packaged contents. These packages do have a variety of uses; and the selection of specific polymers and combinations of polymers depends on the particular use contemplated. A typical use is, as for the structure of FIGURE 2, that of retort packaging.

It is known to coextrude a multiple layer film structure wherein a layer of ethylene vinyl alcohol copolymer is between two layers of polyamide. Such a structure is seen in the substructure of layers 18, 20, and 22. Layer 12 may be part of the coextrusion. Thus, the structure of FIGURE 3 may be advantageously and economically produced in a single processing step by coextruding all four layers simultaneously and combining them in the coextrusion process to form the multiple layer sheet structure.

For enhanced adhesion between layers 12 and 18, it is sometimes desirable to include an adhesive, such as an adhesive polymer, between layers 12 and 18. Such materials are conventionally known and may be selected based on the specific compositions of layers 12 and 18 and the process to be used. Typical of these adhesive polymers are those based on polypropylene and having carboxyl modifications thereto, such as maleic acid or maleic anhydride.

The structure may, of course, be made by other processes but they generally will be more expensive, and thus those processes are less preferred. Illustrative of these is adhesive lamination wherein the layers may be joined using polyester urethane curing type adhesive.

The term polyamide, as used in describing the compositions of layers 18 and 22 is intended to include copolymers and alloys of polyamide, and blend compositions which contain an amide polymer as a major component. Likewise, additives which are normally used with polyamide are acceptable herein and are thus included in the compositions of layers 18 and 22. While the compositions of layers 18 and 22 are usually the same, to facilitate coextrusion of the sheet material, they may be different and the process adapted accordingly.

The term ethylene vinyl alcohol copolymer as used in describing the composition of layer 20, is intended to include blends of ethylene vinyl alcohol copolymer with other polymers. Likewise, additives which are normally used with ethylene vinyl alcohol copolymer are acceptable herein and can thus be included in the composition of layer 20.

4

The blend layer 12 may be any of the blend compositions of the invention. The FIGURE 3 structure, as in FIGURES 1 and 2, is designed such that layer 12 may be used as a heat seal layer. A minimum thickness for achieving strong heat seals is likewise about 1 mil (0.025 mm) in this structure; so that is a preferred minimum thickness. Thicker heat seals may advantageously provide more efficient use of the heat seal material, up to about 4 mils (0.10 mm), so that is a generally preferred maximum thickness. Layer 12 may also be thicker, as described for the corresponding layer 12 in FIGURE 2. Layer 12 may also be less than about 1 mil (0.025 mm) thick, as in all the illustrated embodiments, where heat seals are not used or seal strength is not so critical.

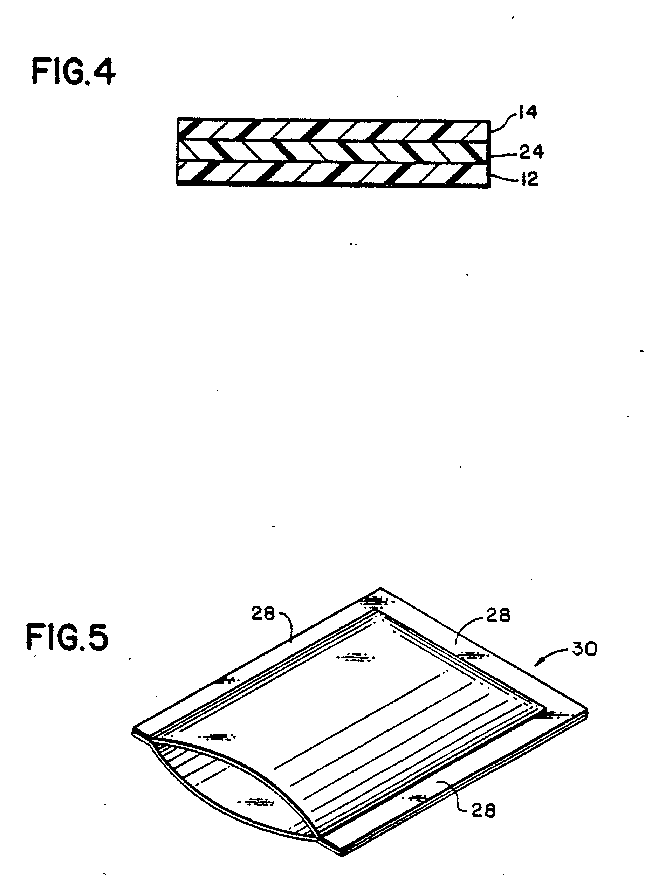

Turning now to FIGURE 4, layer 14 is an abuse resistant layer as in FIGURE 2. Layer 12 is a blend according to the invention as in FIGURES 1-3. Central layer 24 is an oxygen barrier layer such as vinylidene chloride copolymer. Preferred copolymers are vinylidene chloride-vinyl chloride copolymer and vinylidene chloride-methylacrylate copolymer. In the FIGURE 4 structure, layer 24 is usually of a thickness of about 0.3 to about 2.0 mils ($7.6 \times 10^{-3}$ -0.051 mm), depending primarily on the rate of oxygen transmission which can be tolerated for any given end use. While adhesion may be achieved by other means, suitable adhesives, such as the polyester urethane curing adhesives, are usually economically used between the respective layers 12, 24 and 14 to achieve good adhesion between the layers.

For constructing the sheet structure of FIGURE 4, layers 14, 24 and 12 are usually formed separately from each other and then combined into the multiple layer structure shown, by conventional techniques for combining polymer films. In a typical process the layers are joined by conventional adhesive lamination techniques.

As is now evident from the plurality of the multiple layer structures illustrated above, the blend according to the invention can be used to advantage in a variety of multiple layer structures. Indeed a layer of the blend composition may advantageously be used in combination with any other layer which may be adhered to it. Thus, the multiple layer embodiment of the invention may be generically defined as a multiple layer sheet material wherein the composition of at least one layer is comprised of the blend; and wherein the composition of the other layer or layers need not necessarily be restricted except for purposes of obtaining interlayer adhesion acceptable to the intended use.

The multiple layer sheet structures of the invention are advantageously formed into packages using heat seals, as illustrated in FIGURE 5. Typically, portions of the sheet material are brought into face-to-face relationship, with the layers 12 on each portion facing the opposing sheet portion. Heat seals 28 are then formed between the sheet portions about a common periphery to form a container 30 that generally defines an enclosed area. Usually, one side of the thus formed package is left open, as shown for insertion of product. Finally, the filled package is closed and sealed by a heat seal along the open side.

Alternately, the sheet may be formed into a tube by forming a longitudinal seal along overlapping edges; and a transverse seal is also formed across the width of the tube; all as described, for example, in US-A-4,521,437, herein incorporated by reference. This process is particularly suitable for use in vertical form, fill and seal machines.

In overcoming a primary problem of brittleness of the polypropylene in flexible packages, as addressed herein, a number of factors work together in combination. Critical to achievement of the objectives of the invention is incorporation of the second component, of the ethylene-based copolymer, in the blend composition. The contribution of this second component is evidenced by substantially less brittleness in the films and sheet structures made therefrom.

The ethylene-based copolymer of the second component is essentially a copolymer of two moieties, both moieties being present in the main chain of the polymer. The overall mole ratio is about 10 to about 95 mole percent ethylene, and conversely about 90 to about 5 mole percent of the second moiety. The ethylene is preferably copolymerized with either propylene or butene-1. In the case of propylene, the mole ratio preferred range is about 60% to about 80% ethylene and about 40% to about 20% propylene. One such material is sold by Mitsui Petrochemical Industries, Ltd. as TAFMER P. In the case of butene-1, the mole ratio preferred range is about 5% to about 15% butene-1 and about 95% to about 85% ethylene. One such material containing butene-1 is sold by Mitsui Petrochemical Industries, Ltd. as TAFMER A.

The polypropylene which is used as the first component of the blend provides strength to the sheet structure as well as capability to withstand high temperature without excessive softening. The inclusion of the ethylene-based copolymer in the blend composition provides resilience to the blend composition.

Any of the polypropylenes may be used as the first component of the blend. Polypropylenes which are copolymers having about 2 to about 8 mole percent ethylene are preferred, as the copolymer provides some minimum contribution of additional resilience to the polypropylene, as compared to a homopolymer. Whether the polypropylene is a homopolymer or copolymer, its resilience is demonstrated herein, whether having been retort processed, or not retort processed, and is enhanced substantially by the incorporation of the ethylene-based copolymer. Without the incorporation of the ethylene-based copolymer, the polypropylene is at least somewhat brittle, whether homopolymer or copolymer. While polypropylene homopolymer is fully satisfactory for some uses, the polypropylene copolymer is preferred, as it evidences the optimum properties of resistance to shock abuse in combination with the capability to withstand elevated processing temperatures.

While virtually any amount of the ethylene-based copolymer does provide some improvement in the properties of polypropylene, significant improvement is seen at as little as about 5% of the ethylene-based copolymer in the blend composition; so this is generally considered a lower practical limit to the blend compositions of the invention. While up to about 90% of the blend may be ethylene-based copolymer, such blends have some reduction in tolerance to high temperatures; and so are less preferred, with about 70% of the ethylene-based copolymer generally being an upper limit. The most preferred overall balance of properties is seen, however, in blends where the ethylene-based copolymer comprises about 25% to about 50% by weight of the blend composition; and so these are generally the most preferred compositions.

A measure of success herein is the ability of packages made from the compositions of the invention, to withstand shock stress testing. In order to evaluate resistance to shock stress, packages were made from films of the invention and from polypropylene films not of the invention which did not incorporate therein the second component of the blends of the invention. As a first step, the indicated polymers for each variable were dry blended together at room temperature in pellet form. The so-formed compositions were then extruded as single layer films about 3 mils (0.076 mm) thick. The films were then formed into heat sealed pouches, the pouches being filled with approximately 1 liter of water. For each variable, half of the pouches were then retort processed at 250°F (121°C) for 30 minutes and returned to room temperature. Finally, the pouches were dropped in a free fall drop test from increasing heights until the pouch failed. The maximum height from which a pouch was dropped without failure is indicated in Table 1. Where a hyphenated number is shown, the first number represents the height of the drop and the second number (after the hyphen) represents the number of drops for the individual package without failure.

TABLE 1

Drop Strength of Packages

| Composition | Maximum Drop Height, feet(metres) | |
|---|---|---|
| | Not Retort Processed | Retort Processed |
| 100% Norchem 3304 – PPE | 2 (0.61) | F |
| 70% Norchem 3304<br>30% Tafmer A | 7 (2.13) | F |
| 60% Norchem 3304<br>40% Tafmer A | 14-3 (4.27) | 5 (1.52) |
| 100% Phillips CP77-PPE | 2 (0.61) | F |
| 70% Phillips CP77<br>30% Tafmer A | 14-3 (4.27) | F |
| 60% Phillips CP77<br>40% Tafmer A | 14-8 (4.27) | 7 (2.13) |
| 100% Himont SA752-PPE | 4 (1.22) | 4 (1.22) |
| 70% Himont SA752<br>30% Tafmer A | 14-2 (4.27) | 7 (2.13) |
| 60% Himont SA752<br>40% Tafmer A | 14-6 (4.27) | 7 (2.13) |
| 100% W-431-PPE | 1 (0.30) | F |
| 75% W-431<br>25% Tafmer A | 7 (2.13) | 7 (2.13) |
| 60% W-431<br>40% Tafmer A | 14-9 (4.27) | 14-4 (4.27) |
| 75% W-431<br>25% Tafmer P | 14-1 (4.27) | 7 (2.13) |
| 60% W-431<br>40% Tafmer P | 14-3 (4.27) | 7 (2.13) |

7

## TABLE 1 cont.

### Drop Strength of Packages

| Composition | Maximum Drop Height, feet (metres) | |
|---|---|---|
| | Not Retort Processed | Retort Processed |
| 100% Norchem 3011.SO-PP | F | F |
| 90% 3011.SO<br>10% Tafmer A | 1 (0.30) | 1 (0.30) |
| 70% 3011.SO<br>30% Tafmer A | 4 (1.22) | 4 (1.22) |
| 50% 3011.SO<br>50% Tafmer A | 5 (1.52) | 4 (1.22) |
| 90% 3011.SO<br>10% Tafmer P | 1 (0.30) | 1 (0.30) |
| 70% 3011.SO<br>30% Tafmer P | 4 (1.22) | 4 (1.22) |
| 50% 3011.SO<br>50% Tafmer P | 7 (2.13) | 7 (2.13) |

F = failed drop test from 1 foot (0.30 m) height

PP = polypropylene homopolymer

PPE = polypropylene copolymer

It is seen from the data in Table 1 that the incorporation of the Tafmer into the composition to form a blend provided for improved resistance to drop shock abuse in packages, regardless of whether or not they had been subjected to the retort processing. Four of the five polypropylenes tested alone could not survive even the minimal 1 foot (0.30 m) drop tests after retort processing. In each case, the incorporation of the Tafmer component enabled retort processed packages to survive at least moderate height drops, while preserving the high temperature tolerance to the retort processing conditions. In the case of the fifth polypropylene, the performance of pouches made having Tafmer blended into the polymer composition was improved over those made without Tafmer. While four of the unblended polypropylenes whose packages were not retort processed were able to withstand at least minimal drops, the height from which a package could be dropped was increased for each polypropylene with the incorporation of the Tafmer in blend composition.

In another type of test, single layer and two layer films about 3 mils (0.076 mm) thick were made and were formed into packages, filled, and heat sealed as before. Some of the packages were retort processed as before. The packages were then dropped from a height of six feet (1.83 m), three drops per package. This test was controlled such that the packages could be impacted on their faces or on an end, and tests were conducted both ways. Table 2 shows the package structures and the results of the tests.

TABLE 2

| Package Identity | | Drop Test | | | |
|---|---|---|---|---|---|
| Single or Outer layer and Percent of Film Thickness | Inner layer and Percent of Film Thickness | Not Retort Processed | | Retort Processed | |
| | | Face drop | End drop | Face drop | End drop |
| W-351 | NA | F | F | F | F |
| W-431 = 20% | W-132 = 80% | F | F | F | F |
| 80% W-132) = 80%<br>20% 1710 ) | W-132 = 20% | F | F | F | F |
| WBS - 211 | NA | F | F | F | F |
| WRS - 5-516 | NA | F | F | F | F |
| WRS 6-129 | NA | F | F | F | F |
| 60% W-132<br>40% 1710 | NA | F | F | F | F |
| 355 E | NA | F | F | .F | F |
| 85% W-351 ) = 90%<br>15% Tafmer P) | W-351 = 10% | P | P | P | P |
| 80% W-351<br>10% Tafmer P<br>10% Tafmer A | NA | P | P | P | P |

F = packages failed, or visibly weakened, especially by strectching or peeling in seal area.

P = no notable weakening of packages resulted from these drop tests.

W-351 is a polypropylene copolymer.

W-431 is a polypropylene copolymer.

W-132 is a polypropylene copolymer.

1710 is a polybutylene

WBS-211 is a blend of polybutylene and polypropylene copolymer.

WRS-5-516 is a polypropylene homopolymer

WRS 6-129 is a polypropylene copolymer.

355 E is a block copolymer of propylene and ethylene.

Table 2 shows dramatically that the Tafmer blends, in single layer or 2 layer compositions, provide drop test properties not available from the other materials shown therein.

Thus it is seen that the invention provides novel material blend compositions. The invention further provides single layer films and multiple layer films and sheet structures for use in making packages. Indeed, the invention provides heat sealed packages capable of withstanding increased amounts of physical shock type abuse, which is especially noticeable after the closed and sealed packages have been subjected to elevated temperatures of up to about 250°F (121°C).

## Claims

1. A composition of matter comprising a polymeric blend of:

(a) a first component which is about 10% to about 95% by weight of a polypropylene, comprising about 50 mole percent to about 100 mole percent propylene moieties and about 50 mole percent to about 0 mole percent ethylene moieties; and

(b) a second component which is about 90% to about 5% by weight of an ethylene-based copolymer, the ethylene-based copolymer consisting essentially of ethylene copolymerized with moieties of a second molecule, the composition of the second molecule being selected from propylene and butene-1.

2. A polymeric film made from a polymeric blend of:

(a) a first component which is about 10% to about 95% by weight of a polypropylene, comprising about 50 mole percent to about 100 mole percent propylene moieties and about 50 mole percent to about 0 mole percent ethylene moieties; and

(b) a second component which is about 90% to about 5% by weight of an ethylene-based copolymer, the ethylene-based copolymer consisting essentially of ethylene copolymerized with moieties of a second molecule, the composition of the second molecule being selected from propylene and butene-1.

3. A composition or film according to claim 1 or claim 2 respectively, wherein the ethylene-based copolymer comprises about 10 to about 95 mole percent ethylene and about 90 to about 5 mole percent of said moieties of said second molecule.

4. A composition or film according to claim 1, 2 or 3, wherein said blend comprises about 50% to about 95% of the first component and about 50% to about 5% of the second component.

5. A composition or film according to claim 1, 2, 3 or 4, wherein the first component comprises about 92 to about 98 mole percent propylene moieties and about 8 to about 2 mole percent ethylene moieties.

6. A composition or film according to any of claims 1 to 5, wherein the composition of the copolymer of the second component is about 85 to about 95 mole percent ethylene and about 15 to about 5 mole percent butene-1.

7. A composition or film according to any of claims 1 to 5, wherein the composition of the copolymer of the second component is about 60 to about 80 mole percent ethylene and about 40 to about 20 mole percent propylene.

8. A multiple layer sheet structure, comprising:

(a) a first, blend layer the composition of which is a blend including (i) as a first component, about 10% to about 95% by weight of polypropylene, the polypropylene comprising about 50 mole percent to about 100 mole percent propylene moieties and about 50 mole percent to about 0 mole percent ethylene moieties and (ii) as a second component, about 90% to about 5% by weight of an ethylene-based copolymer consisting essentially of ethylene copolymerized with moieties of a second molecule, the composition of the second molecule being selected from propylene and butene-1; and

(b) a second layer.

9. A multiple layer sheet structure, comprising:

(a) a first layer, of metal foil;

(b) a second layer of an abuse resistant polymer adhered to one of the two surfaces of the foil layer; and

(c) a third, blend layer adhered to the sheet structure on the other surface of the foil layer, the composition of the third layer being a blend of (i) about 10% to about 95% by weight of a first component of a polypropylene comprising about 50 mole percent to about 100 mole percent propylene moieties and about 50 mole percent to about 0 mole percent ethylene moieties and (ii) about 90% to about 5% by weight of a second component of an ethylene-based copolymer, the ethylene-based copolymer consisting essentially of ethylene copolymerized with moieties of a second molecule, the composition of the second molecule being selected from propylene and butene-1.

10. A multiple layer sheet structure, comprising:

(a) a first layer, of a polyamide;

(b) a second layer of an ethylene vinyl alcohol copolymer having one of its two surfaces on one of the surfaces of the first layer;

(c) a third layer of a polyamide on the other surface of the second layer; and

(d) a fourth, blend layer adhered to the sheet structure on the other side of the first layer, the composition of the fourth, blend layer being (i) about 10% to about 95% by weight of a first component of a polypropylene comprising about 50 mole percent to about 100 mole percent propylene moieties and about 50 mole percent to about 0 mole percent ethylene moieties and (ii) about 90% to about 5% by weight of a second component of an ethylene-based copolymer, the ethylene-based copolymer consisting essentially of ethylene copolymerized with moieties of a second molecule, the composition of the second molecule being selected from propylene and butene-1.

11. A multiple layer sheet structure, comprising:

(a) a first layer of a barrier material the composition of which is a vinylidene chloride copolymer;

(b) a second layer of an abuse resistant polymer adhered to one of the two surfaces of the first layer; and

(c) a third layer adhered, in the sheet structure, on the other surface of the first layer, the composition of the third layer being a blend of (i) about 10% to about 95% by weight of a first component of a polypropylene comprising about 50 mole percent to about 100 mole percent propylene moieties and about 50 mole percent to about 0 mole percent ethylene moieties and (ii) about 90% to about 5% by weight of a second component of an ethylene-based copolymer, the ethylene-based copolymer consisting essentially of ethylene copolymerized with moieties of a second molecule, the composition of the second molecule being selected from propylene and butene-1.

12. A sheet structure according to any of claims 8 to 11, wherein the ethylene-based copolymer in the blend layer comprises about 10 to about 95 mole percent ethylene and about 90 to about 5 mole percent of the moieties of the second molecule.

13. A sheet structure according to any of claims 8 to 12, wherein the blend layer comprises about 50% to about 95% of the first component and about 50% to about 5% of the second component.

14. A sheet structure according to any of claims 8 to 13, wherein the first component in the blend layer comprises about 92 to about 98 mole percent propylene moieties and about 8 to about 2 mole percent ethylene moieties.

15. A sheet structure according to any of claims 8 to 14, wherein the composition of the ethylene-based copolymer of the second component of the blend layer is about 85 to about 95 mole percent ethylene and about 15 to about 5 mole percent butene-1.

16. A sheet structure according to any of claims 8 to 14, wherein the composition of the ethylene-based copolymer of the second component of the blend layer is about 60 to about 80 mole percent ethylene and about 40 to about 20 mole percent propylene.

17. A package made from a film according to claim 2 or any of claims 3 to 7 when dependent on claim 2.

18. A package made from a multiple layer sheet structure according to any of claims 8 to 16.

19. A package according to claim 17 or claim 18, which has been exposed to retort conditions of at least about 250°F (121°C) for a period of at least about 10 minutes.

Claims for the following Contracting States : AT; ES;

1. A polymeric film made from a polymeric blend of:

(a) a first component which is about 10% to about 95% by weight of a polypropylene, comprising about 50 mole percent to about 100 mole percent propylene moieties and about 50 mole percent to about 0 mole percent ethylene moieties; and

(b) a second component which is about 90% to about 5% by weight of an ethylene-based copolymer, the ethylene-based copolymer consisting essentially of ethylene copolymerized with moieties of a second molecule, the composition of the second molecule being selected from propylene and butene-1.

2. A film according to claim 1, wherein the ethylene-based copolymer comprises about 10 to about 95 mole percent ethylene and about 90 to about 5 mole percent of said moieties of said second molecule.

3. A film according to claim 1 or claim 2, wherein said blend comprises about 50% to about 95% of the first component and about 50% to about 5% of the second component.

4. A film according to claim 1, 2 or 3, wherein the first component comprises about 92 to about 98 mole percent propylene moieties and about 8 to about 2 mole percent ethylene moieties.

5. A film according to any of claims 1 to 4, wherein the composition of the copolymer of the second component is about 85 to about 95 mole percent ethylene and about 15 to about 5 mole percent butene-1.

6. A film according to any of claims 1 to 4, wherein the composition of the copolymer of the second component is about 60 to about 80 mole percent ethylene and about 40 to about 20 mole percent propylene.

7. A multiple layer sheet structure, comprising:

(a) a first, blend layer the composition of which is a blend including (i) as a first component, about 10% to about 95% by weight of polypropylene, the polypropylene comprising about 50 mole percent to about 100 mole percent propylene moieties and about 50 mole percent to about 0 mole percent ethylene moieties and (ii) as a second component, about 90% to about 5% by weight of an ethylene-based copolymer consisting essentially of ethylene copolymerized with moieties of a second molecule, the composition of the second molecule being selected from propylene and butene-1; and

(b) a second layer.

8. A multiple layer sheet structure, comprising:

(a) a first layer, of metal foil;

(b) a second layer of an abuse resistant polymer adhered to one of the two surfaces of the foil layer; and

(c) a third, blend layer adhered to the sheet structure on the other surface of the foil layer, the composition of the third layer being a blend of (i) about 10% to about 95% by weight of a first component of a polypropylene comprising about 50 mole percent to about 100 mole percent propylene moieties and about 50 mole percent to about 0 mole percent ethylene moieties and (ii) about 90% to about 5% by weight of a second component of an ethylene-based copolymer, the ethylene-based copolymer consisting essentially of ethylene copolymerized with moieties of a second molecule, the composition of the second molecule being selected from propylene and butene-1.

9. A multiple layer sheet structure, comprising:

(a) a first layer, of a polyamide;

(b) a second layer of an ethylene vinyl alcohol copolymer having one of its two surfaces on one of the surfaces of the first layer;

(c) a third layer of a polyamide on the other surface of the second layer; and

(d) a fourth, blend layer adhered to the sheet structure on the other side of the first layer, the composition of the fourth, blend layer being (i) about 10% to about 95% by weight of a first component of a polypropylene comprising about 50 mole percent to about 100 mole percent propylene moieties and about 50 mole percent to about 0 mole percent ethylene moieties and (ii) about 90% to about 5% by weight of a second component of an ethylene-based copolymer, the ethylene-based copolymer consisting essentially of ethylene copolymerized with moieties of a second molecule, the composition of the second molecule being selected from propylene and butene-1.

10. A multiple layer sheet structure, comprising:

(a) a first layer of a barrier material the composition of which is a vinylidene chloride copolymer;

(b) a second layer of an abuse resistant polymer adhered to one of the two surfaces of the first layer; and

(c) a third layer adhered, in the sheet structure, on the other surface of the first layer, the composition of the third layer being a blend of (i) about 10% to about 95% by weight of a first component of a polypropylene comprising about 50 mole percent to about 100 mole percent propylene moieties and about 50 mole percent to about 0 mole percent ethylene moieties and (ii) about 90% to about 5% by weight of a second component of an ethylene-based copolymer, the ethylene-based copolymer consisting essentially of ethylene copolymerized with moieties of a second molecule, the composition of the second molecule being selected from propylene and butene-1.

11. A sheet structure according to any of claims 7 to 10, wherein the ethylene-based copolymer in the blend layer comprises about 10 to about 95 mole percent ethylene and about 90 to about 5 mole percent of the moieties of the second molecule.

12. A sheet structure according to any of claims 7 to 11, wherein the blend layer comprises about 50% to about 95% of the first component and about 50% to about 5% of the second component.

13. A sheet structure according to any of claims 7 to 12, wherein the first component in the blend layer comprises about 92 to about 98 mole percent propylene moieties and about 8 to about 2 mole percent ethylene moieties.

14. A sheet structure according to any of claims 8 to 13, wherein the composition of the ethylene-based copolymer of the second component of the blend layer is about 85 to about 95 mole percent ethylene and about 15 to about 5 mole percent butene-1.

12

15. A sheet structure according to any of claims 8 to 13, wherein the composition of the ethylene-based copolymer of the second component of the blend layer is about 60 to about 80 mole percent ethylene and about 40 to about 20 mole percent propylene.

16. A package made from a film according to any of claims 1 to 6.

17. A package made from a multiple layer sheet structure according to any of claims 7 to 15.

18. A package according to claim 16 or claim 17, which has been exposed to retort conditions of at least about 250°F (121°C) for a period of at least about 10 minutes.

**FIG.1**

**FIG.2**

**FIG.3**

FIG.4

FIG.5